# EUROPÄISCHE PATENTSCHRIFT

(11) **EP 1 646 946 B1**
(45) Veröffentlichungstag und Bekanntmachung des Hinweises auf die Patenterteilung: **18.02.2009**
(21) Anmeldenummer: 04739450.7
(22) Anmeldetag: 28.05.2004
(51) Int. Cl.: G06F 11/00

(54) **ZUGRIFF AUF EINE SPEICHERPROGRAMMIERBARE STEUERUNG**
ACCESS TO A PROGRAMMABLE LOGIC CONTROLLER
ACCES A UN AUTOMATE PROGRAMMABLE

(30) Priorität: 18.07.2003 DE 10332793
(43) Veröffentlichungstag der Anmeldung: 19.04.2006
(73) Patentinhaber: SIEMENS AKTIENGESELLSCHAFT, 80333 München (DE)
(72) Erfinder: BEHRINGER, Martin, 92265 Edelsfeld (DE); KREINER, Georg, 92260 Ammerthal (DE)
(86) Internationale Anmeldenummer: PCT/EP2004/005828
(87) Internationale Veröffentlichungsnummer: WO 2005/017751

(56) Entgegenhaltungen:
- EP-A- 0 375 487
- EP-A- 0 561 699
- DE-A1- 4 407 987
- US-A- 4 872 136

## Beschreibung

Die Erfindung betrifft ein System und ein Verfahren zum Zugriff auf eine speicherprogrammierbare Steuerung.

Aus der DE 44 07 987 A1 ist ein Prozesssimulationssystem für speicherprogrammierbare Steuerungen bekannt, bestehend aus einem Personal-Computer (PC) mit einem Beobachtungsbildschirm für den zu simulierenden Prozessablauf und einer mit dem PC verbundenen speicherprogrammierbaren Steuerung (SPS). Der PC und die SPS sind über eine nicht-systemgebundene Schnittstellenschaltung verbunden. Ein Simulationsprogramm des PC steuert über den Druckerausgang des PCs die Schnittstellenschaltung so, dass die Ausgangswerte der steuernden SPS und die Eingangswerte der steuernden SPS zyklisch eingelesen bzw. ausgegeben werden können. Diese Binärwerte werden in Prozessabbildern abgelegt, auf die das Simulationsprogramm ständig zugreift.

Der Erfindung liegt die Aufgabe zugrunde, die Prüfung eines Steuerungsprogramms einer speicherprogrammierbaren Steuerung zu vereinfachen.

Diese Aufgabe wird durch ein System zum Zugriff auf eine speicherprogrammierbare Steurung gelöst, mit einer speicherprogrammierbaren Steuerung und einem über mindestens eine Schnittstelle mit der speicherprogrammierbaren Steuerung gekoppelten Rechner, wobei der Rechner Lesezugriff auf ein erstes Prozessabbild von Eingangssignalen der speicherprogrammierbaren Steuerung und Schreibzugriff auf ein zweites Prozessabbild von Ausgangssignalen der speicherprogrammierbaren Steuerung hat.

Diese Aufgabe wird durch ein Verfahren zum Zugriff auf eine speicherprogrammierbare Steuerung gelost, bei welchem die speicherprogrammierbare Steuerung über mindestens eine Schnittstelle mit einem Rechner gekoppelt ist und der Rechner auf ein erstes Prozessabbild von Eingangssignalen der speicherprogrammierbaren Steuerung lesend zugreift und auf ein zweites Prozessabbild von Ausgangssignalen der speicherprogrammierbaren Steuerung schreibend zugreift.

Die Erfindung ermöglicht die Verarbeitung von physikalischen Eingangssignalen einer speicherprogrammierbaren Steuerung unabhängig von der Laufzeitumgebung des auf der speicherprogrammierbaren Steuerung ablaufenden Steuerungsprogramms und die Bereitstellung von physikalischen Ausgangssignalen für die speicherprogrammierbare Steuerung als Ergebnis der unabhängigen Verarbeitung der Eingangssignale. Die in Prozessabbildern vorliegenden Eingangs- bzw. Ausgangssignale der speicherprogrammierbaren Steuerung können somit erfindungsgemäß durch den über eine Schnittstelle mit der Steuerung gekoppelten Rechner verarbeitet bzw. bereitgestellt werden.

Gemäß einer vorteilhaften Ausgestaltung der Erfindung ist die speicherprogrammierbare Steuerung zur Ausführung eines ersten Steuerungsprogramms und der Rechner zur Ausführung eines zum ersten Steuerungsprogramm identischen zweiten Steuerungsprogramms vorgesehen. Üblicherweise werden bei einem sogenannten Online-Test eines Steuerungsprogramms einer speicherprogrammierbaren Steuerung vom Steuerungsprogramm erzeugte Daten von der speicherprogrammierbaren Steuerung zu einem Rechner übertragen. Die Übertragung der umfangreichen Daten zwischen der Steuerung und dem Rechner ist häufig der Engpass beim Online-Test und kann die Zykluszeit in erheblichem Maße verlängern. Gemäß der vorgeschlagenen Ausgestaltung der Erfindung kann das Datenvolumen, das für einen Online-Test zwischen der Steuerung und dem Rechner ausgetauscht werden muss, stark vermindert werden. Dadurch ist es möglich, den Online-Test ohne wesentliche Veränderung der Zykluszeit durchzuführen.

Gemäß einer weiteren vorteilhaften Ausgestaltung der Erfindung enthält der Rechner Eingabemittel zur Eingabe von Werten und hat der Rechner Schreibzugriff auf das ersten Prozessabbild der speicherprogrammierbaren Steuerung. Die mit den Eingabemitteln eingegebenen Werte können somit durch den Rechner in das erste Prozessabbild der speicherprogrammierbaren Steuerung geschrieben werde. Damit ergibt sich zusätzlich eine direkte, leichte Steuerungsmöglichkeit der Eingangssignale für die speicherprogrammierbare Steuerung. Es können also gezielt einzelne Eingangssignale vom Rechner aus angesteuert werden, wodurch insbesondere die Inbetriebnahme des Steuerungsprogramms der speicherprogrammierbaren Steuerung erleichtert wird.

Nachfolgend wird die Erfindung anhand der in den Figuren dargestellten Ausführungsbeispiele näher beschrieben und erläutert.

Es zeigen:
- FIG 1: ein System mit einer speicherprogrammierbaren Steuerung und einem mit der speicherprogrammierbaren Steuerung gekoppelten Rechner,
- FIG 2: ein System zum Zugriff auf eine speicherprogrammierbare Steuerung mit einem Rechner zur Ausführung eines Steuerungsprogramms und
- FIG 3: ein System zum Zugriff auf eine speicherprogrammierbare Steuerung mit einem Rechner, welcher Schreibzugriff auf das erste Prozessabbild der speicherprogrammierbaren Steuerung hat.

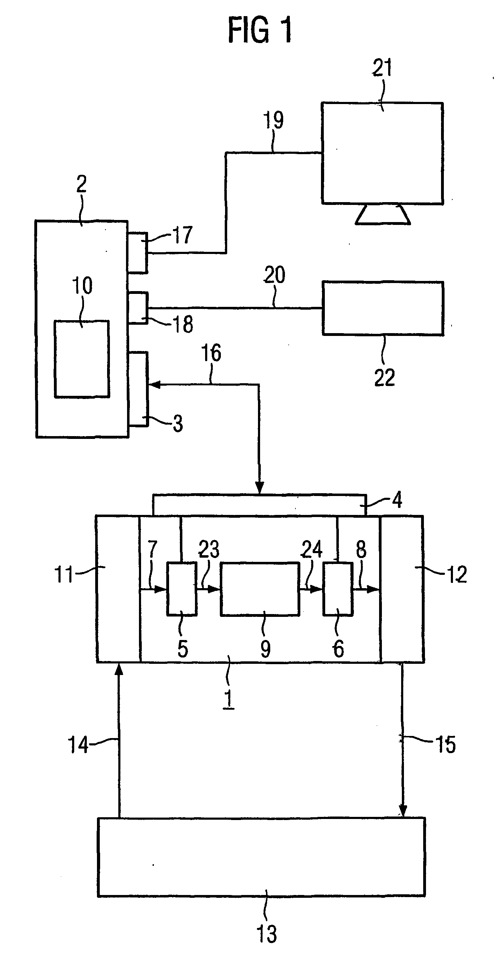

FIG 1 zeigt eine schematische Darstellung eines Systems zum Zugriff auf eine speicherprogrammierbare Steuerung 1 mit einem über mindestens eine Schnittstelle 4 mit der speicherprogrammierbaren Steuerung 1 gekoppelten Rechner 2. Die speicherprogrammierbare Steuerung 1 ist mit einer technischen Anlage oder einem technischen Prozess 13 gekoppelt. Sensorsignale aus der Anlage oder Prozessgrößen 14 aus dem Prozess 13 werden über eine Eingangsbaugruppe 11 eingelesen. Die Eingangsbaugruppe 11 gibt die eingelesenen Werte als Eingangssignale 7 an eine Zentraleinheit der speicherprogrammierbaren Steuerung 1, wo die Eingangssignale 7 in einem ersten Prozessabbild 5 gespeichert werden. Ein in der Zentraleinheit ablauffähiges Steuerungsprogramm 9 hat Zugriff 23 auf das erste Prozessabbild 5. Das Steuerungsprogramm 9 verarbeitet die Eingangswerte in geeigneter Weiser und ermittelt als Ergebnis Ausgangswerte, welche über einen Zugriff 24 auf ein zweites Prozessabbild 6 an dieses Prozessabbild 6 weitergegeben werden. Die im Prozessabbild 6 gespeicherten Ausgangswerte werden als Ausgangssignale 8 an eine Ausgangsbaugruppe 12 weitergeleitet und gelangen z.B. als Steuerungssignale 15 über Kommunikationsmittel in die Anlage bzw. den Prozess 13.

Die speicherprogrammierbare Steuerung 1 ist über eine Schnittstelle 4, eine Verbindung 16 sowie eine weitere Schnittstelle 3 mit einem Rechner 2 gekoppelt. Auf dem Rechner 2 ist ein weiteres Steuerungsprogramm 10 ablauffähig. Der Rechner 2 ist über Schnittstellen 17, 18 und Verbindungen 19, 20 mit einem Ausgabemittel 21 bzw. einem Eingabemittel 22 gekoppelt. Der Rechner 2 hat über die Schnittstellen 3, 4 und die Verbindung 16 Schreib- und/oder Lesezugriff auf ein erstes und/oder zweites Prozessabbild 5, 6 von Eingangssignalen 7 bzw. Ausgangssignalen 8 der speicherprogrammierbaren Steuerung 1. Die speicherprogrammierbare Steuerung 1 ist zur Ausführung des ersten Steuerungsprogramms 9 vorgesehen. Im Ausführungsbeispiel ist der Rechner 2 zur Ausführung eines zum ersten Steuerungsprogramms 9 identischen zweiten Steuerungsprogramms 10 vorgesehen. Ein Anwender kann mittels der Eingabemittel 22 Werte eingeben, welche vom Rechner 2 verarbeitet und z.B. mittels Schreibzugriff auf das erste Prozessabbild 5 der speicherprogrammierbaren Steuerung 1 weitergegeben werden können.

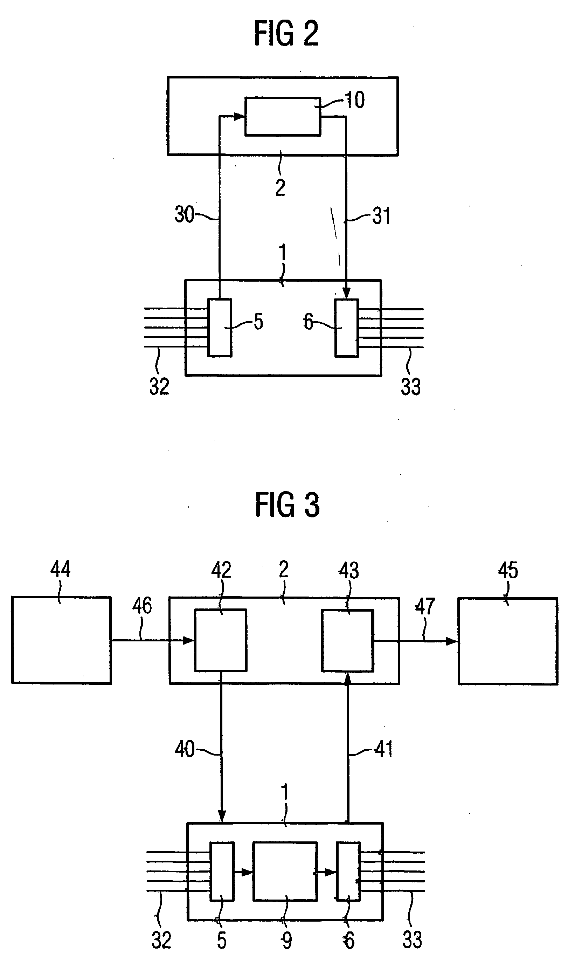

FIG 2 zeigt ein weiteres Ausführungsbeispiel eines erfindungsgemäßen Systems zum Zugriff auf eine speicherprogrammierbare Steuerung 1. In schematisch vereinfachter Darstellung ist eine speicherprogrammierbare Steuerung 1 mit einem ersten Prozessabbild 5 sowie einem zweiten Prozessabbild 6 gezeigt. Das erste Prozessabbild 5 speichert Werte von Eingangssignalen 32, das zweite Prozessabbild 6 speichert Werte von Ausgangssignalen 33. Der Rechner 2 hat einen Lesezugriff 30 auf das erste Prozessabbild 5. Die über den Lesezugriff 30 eingelesenen Werte des Prozessabbilds 5 werden mit einem zweiten Steuerungsprogramm 10 verarbeitet. Ausgangswerte des Steuerungsprogramms 10 werden über einen Schreibzugriff 31 in das Prozessabbild 6 der speicherprogrammierbaren Steuerung 1 geschrieben.

Das System zum Zugriff auf eine speicherprogrammierbare Steuerung 1 kann vorteilhafterweise zum Testen des ersten Steuerungsprogramms 9 verwendet werden. Üblicherweise erfolgt ein Online-Test des Steuerungsprogramms der speicherprogrammierbaren Steuerung über einen Rechner, welcher mit der speicherprogrammierbaren Steuerung gekoppelt ist. Dabei werden über eine geeignete Schnittstelle und geeignete Zugriffsfunktionen bei Programmausführung generierte Werte an den Rechner gegeben und dort gegebenenfalls zur Darstellung gebracht. Die üblicherweise begrenzte Übertragungskapazität der Verbindung zwischen speicherprogrammierbarer Steuerung und Rechner beschränkt dabei die Anzahl der übertragbaren Werte. Zudem muss die Auswahl der zu übertragenen Werte üblicherweise vor dem Start des Online-Tests erfolgen. Gemäß dem hier vorgeschlagenen System wird das zu testende erste Steuerungsprogramm 9 in einer Kopie als zum ersten Steuerungsprogramm 9 identisches zweites Steuerungsprogramm 10 auf dem Rechner 2 ausgeführt. Um einen realitätsnahen Online-Test zu erhalten, werden die normalerweise durch das erste Steuerungsprogramm 9 auf der speicherprogrammierbaren Steuerung 1 verarbeiteten Eingangssignale, welche im ersten Prozessabbild zwischengespeichert werden, über den Lesezugriff 30 vom Rechner 2 eingelesen und durch das auf dem Rechner 2 ausführbare zweite Steuerungsprogramm 10 verarbeitet. Entsprechend werden die Ergebniswerte, welche das zweite Steuerungsprogramm 10 ermittelt hat, über einen Schreibzugriff 31 in das Prozessabbild 6 der speicherprogrammierbaren Steuerung geschrieben. Die Eingangssignale 32 aus einem Prozess oder einer Anlage werden somit in gleicher Weise durch das zweite Steuerungsprogramm 10, welche auf dem Rechner 2 abläuft, verarbeitet und Ergebniswerte des Steuerungsprogramms 10 werden als Ausgangssignale 33 an die Anlage bzw. den Prozess in gleicher Weise ausgegeben als ob die Programmverarbeitung durch das erste Steuerungsprogramm 9 mittels der speicherprogrammierbaren Steuerung 1 erfolgen würde. Das erste Steuerungsprogramm 9 kann über die Verbindung 16 gemäß FIG 1 sowohl vom Rechner 2 gelesen werden als auch über die Verbindung 16 in einen Speicher der speicherprogrammierbaren Steuerung 1 geladen werden. Somit können am zweiten Steuerungsprogramm 10 vorgenommene Änderungen auf komfortable Weise in das erste Steuerungsprogramm 9 übernommen werden. Mit geeigneten Verfahren kann somit sichergestellt werden, dass das erste und das zweite Steuerungsprogramm 9 bzw. 10 identisch sind bzw. bleiben. Die Ausführung des zweiten Steuerungsprogramms 10 auf dem Rechner 2 kann über die Anzeigemittel 21 beobachtet sowie über die Eingabemittel 22 gesteuert werden. Da das zweite Steuerungsprogramm 10 auf dem Rechner 2 abläuft, kann über den Rechner 2 komfortabel auf sämtliche Programmwerte, z.B. auf Registerwerte oder auf Werte von Datenbausteinen zugegriffen werden. Das zweite Steuerungsprogramm 10 kann beispielsweise in einem Fehlersuchmodus als sogenannter "Debugger" betrieben werden.

In einer Ausgestaltung der Erfindung wird mit einem PC über die Schnittstelle einer speicherprogrammierbaren Steuerung, z.B. einer Kleinststeuerung, das Prozessabbild gelesen. Im PC, in dem das gleiche Programm wie auf der speicherprogrammierbaren Steuerung geladen ist, läuft ein Interpreter, der die Eingänge aus dem Prozessabbild in den Interpreter einspeist. Die berechneten Ausgangswerte werden anschließend in das Prozessabbild der speicherprogrammierbaren Steuerung geschrieben. Die speicherprogrammierbare Steuerung liest die Signale an ihren physikalischen Eingängen und schreibt die Ausgänge im Prozessabbild auf ihre physikalischen Ausgänge.

FIG 3 zeigt ein weiteres Ausführungsbeispiel eines Systemes zum Zugriff auf eine speicherprogrammierbare Steuerung 1, bei welchem der Rechner 2 Eingabemittel 44 zur Eingabe von Werten enthält und Schreibzugriff auf das erste Prozessabbild 5 der speicherprogrammierbaren Steuerung 1 hat. Mit den Eingabemitteln 44, welche im Rechner 2 enthalten sein können oder über eine Verbindung 46 mit diesem gekoppelt sein können, sind Werte in Speichermittel 42 des Rechners 2 eingebbar. Die eingegebenen Werte können über einen Schreibzugriff 40 auf das Prozessabbild 5 der speicherprogrammierbaren Steuerung 1 in das Prozessabbild 5 geschrieben werden. Eingangssignale 32 von einem Prozess bzw. einer Anlage werden somit gegebenenfalls ganz oder teilweise im Prozessabbild 5 durch die eingegebenen Werte überschrieben bzw. ersetzt. Das erste Steuerungsprogramm 9, welches in der speicherprogrammierbaren Steuerung 1 abläuft, liest die Werte des Prozessabbilds 5 als Eingangswerte ein, verarbeitet diese und gibt errechnete Ausgangswerte in das Prozessabbild 6 aus. Die im Prozessabbild 6 zwischengespeicherten Werte werden als Ausgangssignale 33 an einen Prozess bzw. eine Anlage ausgegeben. Bei Bedarf kann über einen Lesezugriff 41 auf das Prozessabbild 6 der speicherprogrammierbaren Steuerung 1 zugegriffen werden. Die derart aus dem Prozessabbild 6 ausgelesenen Werte können in Speichermitteln 43 des Rechners 2 gespeichert werden und über eine Verbindung 47 an Ausgabemittel 45 weitergegeben werden und dort zur Darstellung gebracht werden. Diese Ausgestaltung der Erfindung bietet insbesondere bei der Inbetriebsetzung einer technischen Anlage, welche durch die Ausgangssignale 33 der speicherprogrammierbaren Steuerung 1 geregelt bzw. gesteuert werden soll, Vorteile. Ein Anwender kann mit den Eingabemitteln 44 über den Schreibzugriff 40 die Eingabewerte für das erste Steuerungsprogramm 9 vorgeben und somit die Reaktion der speicherprogrammierbaren Steuerung auf genau festgelegte Eingangssignale testen. Die Ergebnisse, welche das erste Steuerungsprogramm 9 liefert, können über den Lesezugriff 41 verfolgt werden, selbst dann, wenn die Ausgangssignale 33 nicht bzw. noch nicht mit einem Prozess oder einer Anlage verbunden sind. Das Steuerungsprogramm 9 kann somit frühzeitig im Projektierungsprozess auf korrekte Funktionsfähigkeit getestet werden.

Gemäß einer Ausgestaltung der Erfindung befindet sich der Interpreter auf der speicherprogrammierbaren Steuerung: Der PC stellt eine Eingabemöglichkeit für die Eingänge zur Verfügung und schreibt den Zustand der Eingänge zyklisch in das Prozessabbild der speicherprogrammierbaren Steuerung. Die speicherprogrammierbare Steuerung liest ihre Eingangssignale nicht von den physikalischen Eingängen, sondern aus dem Prozessabbild.

Zusammenfassend betrifft die Erfindung somit ein System sowie ein Verfahren zum Zugriff auf eine speicherprogrammierbare Steuerung. Um die Prüfung eines Steuerungsprogramms einer speicherprogrammierbaren Steuerung zu vereinfachen, wird vorgeschlagen, dass die speicherprogrammierbare Steuerung 1 über mindestens eine Schnittstelle 4 mit einem Rechner 2 gekoppelt ist und dass der Rechner 2 auf ein erstes Prozessabbild 5 von Eingangssignalen 7 der speicherprogrammierbaren Steuerung 1 lesend zugreift und auf ein zweites Prozessabbild 6 von Ausgangssignalen 8 der speicherprogrammierbaren Steuerung 1 schreibend zugreift.

## Patentansprüche

1. System zum Zugriff auf eine speicherprogrammierbare Steuerung (1)
mit einer Zentraleinheit der speicherprogrammierbaren Steuerung (1) und
einem in der Zentraleinheit der speicherprogrammierbaren Steuerung enthaltenen erstes ablauffähigen Steuerprogramm (9) und
einem über mindestens eine Schnittstelle (4) mit der Zentraleinheit der speicherprogrammierbaren Steuerung (1) gekoppelten Rechner (2),
**dadurch gekennzeichnet,**
**dass** der Rechner (2)
• Lesezugriff auf ein erstes Prozessabbild (5) von Eingangssignalen (7) für das auf der Zentraleinheit der speicherprogrammierbaren Steuerung (1) ablauffähige erste Steuerprogramm (9) und
• Schreibzugriff auf ein zweites Prozessabbild (6) von Ausgangssignalen (8) von dem auf der Zentraleinheit der speicherprogrammierbaren Steuerung (1) ablauffähige erste Steuerprogramm (9) hat.

2. System nach Anspruch 1,
**dadurch gekennzeichnet,**
**dass** der Rechner (2) zur Ausführung eines zum, auf der Zentraleinheit ablauffähigen ersten Steuerungsprogramm (9) identischen, zweiten Steuerungsprogramms (10) vorgesehen ist.

3. System nach Anspruch 1 oder 2,
**dadurch gekennzeichnet,**
**dass** der Rechner (2) Eingabemittel (22) zur Eingabe von Werten enthält und Schreibzugriff auf das erste Prozessabbild (5) der speicherprogrammierbaren Steuerung (1) hat.

4. Verfahren zum Zugriff auf eine speicherprogrammierbare Steuerung (1), bei welchem auf der Zentraleinheit der speicherprogrammierbare Steuerung (1) ein erstes ablauffähiges Steuerprogramm (9) ausführbar ist und die Zentraleinheit der speicherprogrammierbare Steuerung (1) über mindestens eine Schnittstelle (4) mit einem Rechner (2) gekoppelt ist,
**dadurch gekennzeichnet,**
**dass** der Rechner (2) auf ein in der Zentraleinheit der speicherprogrammierbare Steuerung gespeichertes erstes Prozessabbild (5) von Eingangssignalen (7) für das auf der speicherprogrammierbaren Steuerung (1) ablauffähiges Steuerprogramm (9) lesend zugreift und auf ein in der Zentraleinheit der speicherprogrammierbare Steuerung gespeichertes zweites Prozessabbild (6) von Ausgangssignalen (8) von dem auf der speicherprogrammierbaren Steuerung (1) ablauffähiges Steuerprogramm (9) schreibend zugreift.

5. Verfahren nach Anspruch 4,
**dadurch gekennzeichnet,**
**dass** der Rechner (2) ein zum ersten Steuerungsprogramm (9) identisches zweites Steuerungsprogramm (10) ausführt.

6. Verfahren nach Anspruch 4 oder 5,
**dadurch gekennzeichnet,**
**dass** über Eingabemittel (22) in den Rechner (2) Werte eingegeben werden und der Rechner (2) auf das erste Prozessabbild (5) der speicherprogrammierbaren Steuerung (1) schreibend zugreift.

## Claims

1. System for accessing a programmable logic controller (1), having a central processing unit of the programmable logic controller (1), and
a first executable control program (9) which is contained in the central processing unit of the programmable logic controller, and
a computer (2) which is coupled to the central processing unit of the programmable logic controller (1) by means of at least one interface (4),
**characterized in that**
the computer (2)
• has read access to a first process map (5) of input signals (7) for the first control program (9) which can be executed in the central processing unit of the programmable logic controller (1), and
• has write access to a second process map (6) of output signals (8) from the first control program (9) which can be executed in the central processing unit of the programmable logic controller (1).

2. System according to Claim 1,
**characterized in that**
the computer (2) is intended to execute a second control program (10) which is identical to the first control program (9) which can be executed in the central processing unit.

3. System according to Claim 1 or 2,
**characterized in that**
the computer (2) contains input means (22) for inputting values and has write access to the first process map (5) of the programmable logic controller (1).

4. Method for accessing a programmable logic controller (1), in which a first executable control program (9) can be executed in the central processing unit of the programmable logic controller (1), and
the central processing unit of the programmable logic controller (1) is coupled to a computer (2) by means of at least one interface (4),
**characterized in that**
the computer (2) effects read access to a first process map (5), which is stored in the central processing unit of the programmable logic controller, of input signals (7) for the control program (9) which can be executed in the programmable logic controller (1), and effects write access to a second process map (6), which is stored in the central processing unit of the programmable logic controller, of output signals (8) from the control program (9) which can be executed in the programmable logic controller (1).

5. Method according to Claim 4,
**characterized in that**
the computer (2) executes a second control program (10) which is identical to the first control program (9).

6. Method according to Claim 4 or 5,
**characterized in that**
values are input to the computer (2) using inputs means (22), and the computer (2) effects write access to the first process map (5) of the programmable logic controller (1).

## Revendications

1. Système d'accès à un automate (1) programmable comprenant une unité centrale de l'automate (1) programmable et
un premier programme (9) de commande séquençable contenu dans l'unité centrale de l'automate programmable et, un ordinateur (2) couplé à l'unité centrale de l'automate (1) programmable par au moins une interface (4),
**caractérisé**
**en ce que** l'ordinateur (2)
• a un accès en lecture à une première reproduction (5) de processus par des signaux (7) d'entrée pour le premier programme (9) de commande séquençable sur l'unité centrale de l'automate (1) programmable et,
• un accès en écriture à une deuxième reproduction (6) de processus par des signaux (6) de sortie du premier programme (9) de commande séquençable sur l'unité centrale de l'automate (1) programmable.

2. Système suivant la revendication 1
**caractérisé**
**en ce que** l'ordinateur (2) est prévu pour la réalisation d'un deuxième programme (10) de commande identique au premier programme (9) de commande séquençable sur l'unité centrale.

3. Revendication 1 ou 2,
**caractérisé**
**en ce que** l'ordinateur a des moyens (22) d'entrée de valeur et a un accès en écriture sur la première reproduction (5) de processus de l'automate (1) programmable.

4. Procédé d'accès à un automate (1) programmable dans lequel un premier programme (9) de commande séquençable peut être réalisé sur l'unité centrale de la commande (1) programmable et l'unité centrale de la commande (1) programmable est couplée à un ordinateur (2) par au moins une interface, (4)
**caractérisé**
**en ce que** l'ordinateur (2) accède en lecture à une première reproduction (5) de processus mémorisé dans l'unité centrale de l'automate programmable par des signaux (7) d'entrée pour le programme (9) de commande séquençable sur l'automate (1) programmable et accède en écriture sur une deuxième reproduction (6) de processus mémorisé dans l'unité centrale de l'automate programmable par des signaux (8) de sortie du programme (9) de commande séquençable sur l'automate (1) programmable.

5. Procédé suivant la revendication (4),
**caractérisé**
**en ce que** l'ordinateur (2) réalise un deuxième programme (10) de commande identique au premier programme (9) de commande.

6. Procédé suivant la revendication 4 ou 5,
**caractérisé**
**en ce que** l'on entre des valeurs dans l'ordinateur (2) par des moyens (22) d'entrée et l'ordinateur (2) accède en écriture à la première reproduction (5) de processus de l'automate (1) programmable.
